# EUROPÄISCHE PATENTSCHRIFT

(11) **EP 2 030 298 B1**
(45) Veröffentlichungstag und Bekanntmachung des Hinweises auf die Patenterteilung: **14.07.2010**
(21) Anmeldenummer: 08748716.1
(22) Anmeldetag: 28.03.2008
(51) Int. Cl.: H02J 3/38, H02J 13/00, H02J 1/10

(54) **WECHSELRICHTER ZUR NETZEINSPEISUNG IN EIN WECHSELSTROMNETZ**
INVERTER FOR POWER SUPPLY SYSTEM FEEDING INTO AN AC POWER SUPPLY SYSTEM
ONDULEUR D'ALIMENTATION D'UN RÉSEAU À COURANT ALTERNATIF

(30) Priorität: 14.05.2007 DE 102007022879
(43) Veröffentlichungstag der Anmeldung: 04.03.2009
(73) Patentinhaber: SMA Solar Technology AG, 34266 Niestetal (DE)
(72) Erfinder: BÖRGER, Stefan, 34130 Kassel (DE); DREWS, Peter, 34128 Kassel (DE)
(74) Vertreter: Walther, Robert
(86) Internationale Anmeldenummer: PCT/DE2008/000541
(87) Internationale Veröffentlichungsnummer: WO 2008/138288

(56) Entgegenhaltungen:
- EP-A- 1 047 179
- EP-A- 1 580 862
- WO-A-03/056671

## Beschreibung

Die Erfindung betrifft einen Wechselrichter zur Netzeinspeisung in ein Wechselstromnetz, der eingangsseitig mit einem elektrische Energie erzeugenden Generator verbindbar ist.

In einem Stromverbund sind Kraftwerke signifikanter Leistung an übergeordnete Energieleitsysteme angeschlossen. In erster Linie sind Kernkraftwerke, Kohlekraftwerke, Gasturbinenkraftwerke, Wasserkraftwerke, also sogenannte Großkraftwerke angeschlossen.

Photovoltaikanlagen oder z. B. kleinere Blockheizkraftwerke liefern eine, im Vergleich zu den genannten Kraftwerken, wesentlich geringere Leistung, so dass die Anlagen auch wegen ihrer Vielzahl nicht unmittelbar an ein Leitsystem angeschlossen sind. Der technische Aufwand wäre einerseits unvertretbar hoch und andererseits wären die Kosten einer solchen Anbindung an ein Leitsystem hoch. In diesem Zusammenhang aus den folgenden Veröffentlichungen:
1. Mauch, K.: Power Electronic Interfaces for DER. First International Conference on the Integrated of RE and DER, 1-3 Decembre, 2004, Brussels;
2. Jahn, J.; Reekers, J.; Meinhardt, M.: Dezentrale Energieerzeugung: Weiterentwicklung von der reinen Einspeisung zum intelligenten System NEuK 2006;
3. Meinhardt, M.: Zukünftige netztechnische Einbindung von PhotovoltaikAnlagen, Hannover, 24. April 2006.

Die Photovoltaikanlagen liefern Leistungen im kW-Bereich, also deutlich unterhalb der Leistung von Großkraftwerken. Wegen der steigenden Anzahl solcher Anlagen stellt die Einspeisung elektrischer Energie zunehmend ein Steuerungsproblem für Energieleitsysteme dar. Prognosen eines Energiebeitrags lassen sich nicht genau vorhersagen, da die Energieerzeugung von beispielsweise der Sonneneinstrahlung bzw. allgemeinen Witterungseinflüssen abhängig ist. Großkraftwerke, insbesondere Grundlastkraftwerke, können auf sich stark ändernde Verhältnisse kaum reagieren. Werden Grundlastkraftwerke zum Beispiel abgeschaltet, dann dauert ein erneutes Hochfahren verhältnismäßig lange. Problematisch ist, dass die Energieeinspeisung von Photovoltaikanlagen stark variiert. So kann es vorkommen, dass für ein Stromnetz außerhalb der Spitzenzeiten kein Bedarf an Photovoltaikstrom besteht. Zwar werden häufig elektrische Speicher, insbesondere Akkumulatoren, an Photovoltaikanlagen als Puffer eingesetzt, diese Verfahrensweise ist jedoch relativ teuer und die Pufferkapazitäten begrenzt. Ungenutzte Solarenergie ist auf der anderen Seite unerwünscht, da sie die Wirtschaftlichkeit einer Anlage deutlich senkt.

Ein weiteres Problem ist, dass Photovoltaikanlagen und andere Anlagen zur regenerativen Stromerzeugung, wie kleinere Windkraftwerke weit voneinander entfernt liegen.

Der Erfindung liegt die Aufgabe zugrunde, eine Lösung zu finden, mit der einerseits eine Vielzahl kleinerer Stromerzeuger in ein Leitsystem in wirtschaftlicher Weise eingebunden werden kann, um eine zuverlässige Energieversorgung sicherzustellen, und andererseits eine Optimierung einer in ein Stromnetz einzuspeisenden Leistung von Kraftwerken möglich ist.

Diese Aufgabe wird erfindungsgemäß dadurch gelöst, dass ein Wechselrichter zur Netzeinspeisung in ein Wechselstromnetz, der eingangsseitig mit einem elektrische Energie erzeugenden Generator verbindbar ist, eine Datenverbindung zu einem Datennetzwerk aufweist, wobei das Datennetzwerk eine Vielzahl weiterer Wechselrichter mit weiteren Stromerzeugern zur Stromeinspeisung in das Wechselstromnetz umfasst, wobei das Datennetzwerk mit dem einen Wechselrichter eine Kommunikationseinheit bildet, wobei der eine einzelne Wechselrichter als Master eine Steuereinheit für die Kommunikationseinheit mit der Vielzahl weiterer als Slaves arbeitender Wechselrichter bildet, wobei durch die Steuereinheit die Kommunikationseinheit so gesteuert wird, dass eine bezüglich Einspeiseparameter einheitliche Kraftwerkseinheit vorhanden ist, die einem Stromverbund als externe Einheit mit zusammengefasster Kontroll- und Steuerungsstruktur angeschlossen ist, wobei das Datennetzwerk durch den als Master arbeitenden Wechselrichter an eine übergeordnete Steuerung, insbesondere an einem lokalen oder überregionalen Leitsystem angeschlossen ist, wobei die übergeordnete Steuerung Sollwerte, Kommandes und/oder Parameter zum aus den Wechselrichtern bestehenden Netzwerksendet wobei dann, wenn der Master ausfällt, ein Slave, der hierarchisch unter dem Master angeordnet ist, die Masterrole übernimmt.

Die Erfindung beruht auf den Gedanken, stromerzeugende, dezentrale Anlagen, die eine verhältnismäßig kleine Leistung liefern, zu einem einheitlichen Kraftwerk zusammenzufassen, indem Wechselrichter untereinander durch Datenkommunikation vernetzt werden. Hierbei arbeitet einer, nämlich ein übergeordneter Wechselrichter in der Kommunikationseinheit als Master, die anderen Wechselrichter, die diesem einen Wechselrichter untergeordnet sind als Slaves. Bei Ausfall des als Master arbeitenden Wechselrichters übernimmt der Nächste in dem Datennetzwerk aus Wechselrichtern die Rolle des Masters, der vorteilhaft hierarchisch darunter angeordnet ist. Durch die Anbindung an das Leitsystem kann das Energiemanagement durch aus verbessert werden.

Solche Master-Slave Lösungen sind zuverlässig und in der Praxis in zahlreichen Anwendungsgebieten erprobt. Die Besonderheit einer Netzwerkkommunikation des erfindungsgemäßen Wechselrichters besteht auch darin, dass sich sowohl die Rolle der einzelnen Netzteilnehmer als Master oder Slave als auch die Zusammenfassung in einem Kommunikationsverbund bei Bedarf automatisch herausbildet, ohne dass ein manueller Eingriff dazu erforderlich ist.

Im Gegensatz zum zuvor zitierten Stand der Technik werden die einzelnen Energieerzeugungsanlagen zu einer "Kraftwerkskomponente" zusammengefasst, die Steuerung findet intern, innerhalb der Kommunikationseinheit statt, wobei durch den als Master arbeitenden Wechselrichter die anderen Wechselrichter angesteuert werden. Lediglich dieser eine Master-Wechselrichter wird von außen angesteuert, nicht allerdings wie nach dem Stand der Technik jeder einzelne der Wechselrichter.

Eine Vernetzung der Wechselrichter ist mit verhältnismäßig wenig Aufwand möglich. Zusätzliche Module sind nicht erforderlich, da die Schnittstellen zur Datenkommunikation in einem Wechselrichtergehäuse angeordnet sein können. Dies hat außerdem den Vorteil kurzer Steuerungswege zu in den Wechselrichtern vorhandenen Halbleitern, was eine schnelle Regelung des Wechselrichters ermöglicht.

Befehle eines übergeordneten Leitsystems können optimal ausgeführt werden, indem durch interne Datenkommunikation der Wechselrichter eine optimale Parameteranpassung gegeben ist. So können auch unterschiedliche miteinander vernetzte Energieerzeugungsanlagen durch interne Datenkommunikation den Anforderungen des Stromnetzes angepasst werden, so dass eine bestmögliche Ausnutzung, beispielsweise von Solarstrom, gegeben ist.

Auch ist es möglich, die Kapazität von elektrischen Speichern, die relativ teuer sind, deutlich zu senken. So kann durch die Erfindung stets eine maximale Netzeinspeisung von Solarstrom erreicht werden, indem dem Solarstrom eine höhere Priorität vergeben wird, so dass beispielsweise Wasserspeicherkraftwerke, die als Spitzenlastkraftwerke in einem Stromverbund eingesetzt werden, eine zeitlich gesehen weiter nach hinten verschobene Energiereserve bieten können.

Durch die Erfindung ist nicht nur eine optimale Energieausnutzung möglich, sondern auch eine effiziente Stabilisierung des Stromnetzes durch Ansteuerung der Halbleiterwechselrichter erreichbar.

Die Erfindung beruht also darauf, dass alle Stromeinspeiser, die zu einem Kraftwerk zusammengefasst werden, eine einheitliche Kommunikationseinheit bilden. D. h. die Wechselrichter bilden die Kommunikationseinheit.

Durch die mit Kommunikationsmitteln untereinander vernetzten Stromeinspeiser ist es möglich, durch einen permanenten Datenaustausch untereinander die nötige "lokale Intelligenz" hervorzubringen, die es ermöglicht, die Stromeinspeiser zu einer Einheit als Kraftwerk zusammenzufassen.

Möglich ist auch ein zusätzliches Kontrollorgan auf einer der zur Verfügung stehenden Schnittstellen in das Daten- bzw. Einspeisenetzwerk einzubringen, welches dann in der Lage ist, auch komplexe Steuerungs- und Regelungsaufgaben zu übernehmen. Dies ist besonders bei einer Struktur mit vielen unterschiedlichen Stromerzeugern vorteilhaft.

Ein wichtiger Vorteil der Erfindung ist, dass die Steuerung eines aus einer Vielzahl von Stromerzeugern bestehenden Kraftwerks auch ohne einen externen Eingriff eines übergeordneten Leitsystems erfolgen kann. Die vorteilhafte Ausnutzung der Erfindung erlaubt eine Definition von übergeordneten Zielen, die ein vorzugsweise Master des durch die Erfindung geschaffenen Kraftwerks auf Grund seiner Kommunikationsvernetzung mit allen Kraftwerksteilnehmern umsetzen kann. Diese Ziele können ein oder mehrere der Steuerungsaufgaben der Steuereinheit sein.

Die Steuereinheit kann beispielsweise in einfacher Weise zur phasensymmetrischen Einspeisung, zum Betrieb in einem auf die Gesamtanlage gesehen optimalen Arbeitsbereich, zur Speicherung überschüssiger Energie in elektrische Speicher, insbesondere Akkumulatoren, zur Reduzierung einer eingespeisten Leistung, insbesondere anhand einer Frequenzstatik, zur Trennung von nicht effizienten Stromerzeugern und/ zur Kompensation durch Stromerzeuger mit Leistungsreserven ausgebildet sein.

Die erfindungsgemäße Kommunikationseinheit erlaubt es, dem Betreiber von elektrischen Energieerzeugungsanlagen, wie Kraftwerken oder anderen Stromeinspeisern, die Einspeiseleistung seiner Energieerzeugungsanlage den Bedürfnissen entsprechend einer Situation in einem Verbundnetz anzupassen. Die ist insbesondere dann von Vorteil, wenn das Kraftwerk aus mehreren Einzelenergieerzeugern bzw. Energieeinspeisern besteht, die ihrerseits autark zur Energieeinspeisung geeignet sind. Vorteilhaft ist bei der Erfindung, dass Stromeinspeiser eine einheitliche Repräsentation nach außen darstellen. Dies wird dadurch erreicht, dass die Teilnehmer in einem Kraftwerksverbund automatisch in einem Datennetzwerk untereinander durch den erfindungsgemäßen Wechselrichter verbunden sind.

Ein solches hier beschriebenes Kraftwerk kann aus einer Vielzahl von Einspeisern der folgenden Art bestehen, insbesondere mindestens einer Photovoltaik-Anlage zur Netzeinspeisung, mindestens einem Brennstoffzellen-Stromerzeuger, Batteriesystemen mit Netzeinspeiser bzw. Inverter, mindestens einem Biomasse-Kraftwerk, mindestens einem Blockheizkraftwerk, mindestens einem auf einem Brennstoffmotor basierenden Aggregat zur Stromerzeugung, der mobil aber auch ortsfest sein kann, sowie mindestens einem Windenergiegenerator bzw. Windenergiekonverter zur Netzeinspeisung, mindestens einem Wasserkraftgenerator zur Netzeinspeisung und/oder mindestens einem Gasturbinengenerator zur Netzeinspeisung. Ein Vorteil der Erfindung ist also, dass ein solches aus mehreren einzelnen Einspeisern bestehendes Kraftwerk durchaus heterogen aus einem Mix aller aufgeführten Energieerzeugern aufgebaut sein kann. Auch dieser Mix aus unterschiedlichen Energieerzeugungsanlagen kann durch geeignete Gateways (Schnittstellen mit lokaler Intelligenz/Mikroprozessor zur Protokoll umsetzung) in das Netzwerk der Kommunikationseinheit eingebunden werden. Diese Gateways beherrschen vorteilhaft die jeweils unterschiedliche spezifische Art der Kommunikation bzw. Steuerung mit den unterschiedlichen Energieerzeugern.

Um solche Anpassungen auf externe Anforderungen sinnvoll vornehmen zu können, ist es zweckmäßig, wenn das Kraftwerk auf bestimmte Ereignisse vorbereitet ist und diese mit kurzen Reaktionszeiten erkennen kann sowie darauf reagieren kann. Solche Ereignisse sind insbesondere eine erhöhte Leistungsanforderung im Verbundnetz, die zum Beispiel eine maximale Ausgangsleistung des Kraftwerkes erforderlich macht, eine niedrige Leistungsanforderung im Verbundnetz, die eine beschränkte, angepasste Ausgangsleistung des Kraftwerkes bewirkt, eine Anforderung einer symmetrischen Einspeisung auf den drei Phasen in einem dreiphasigen System, eine Auswertung einer Lastverteilung und eine Anpassung einzelner Einspeiser in einer Einspeiseleistung, so dass das Kraftwerk als Einheit eine symmetrische Einspeisung vornimmt und/oder ein Ausfall einzelner anderer Kraftwerke des Stromverbundes kompensieren kann bzw. ein Zuschalten einzelner anderer Kraftwerke zum Verbund mit einer automatischen Einbindung realisiert.

Durch die Zusammenfassung der Stromeinspeiser mit relativ kleiner Leistung kann eine Einwirkung auf die einzelnen Kraftwerke des Stromverbundes durch ein übergeordnetes Leitsystem selbst dann stattfinden, wenn ein einzelner mit dem erfindungsgemäßen Wechselrichter verbundener Stromerzeuger praktisch keinen nennenswerten Beitrag zur Energieversorgung leistet. So kann das neue insbesondere vorwiegend auf regenerativer Energie basierende neue, dezentrale Kraftwerk wie eine Windkraftanlage, ein Gasturbinenkraftwerk großer Leistung, ein Großkraftwerk auf Basis fossiler Brennstoffe oder ein Kernkraftwerk in den Stromverbund eingebunden werden. Durch die Vielzahl der Einspeiser wird die erforderliche Einspeiseleistung erreicht.

Besonders günstig ist es, dass hierbei ein hochwertiger Energiebeitrag und damit höhere Verkaufspreise durch das erfindungsgemäße Kraftwerk erzielt werden kann. Durch die Erfindung ist es möglich, bei Bedarf eine Spitzenlast in sehr kurzer Zeit zu liefern bzw. verhältnismäßig teuren Strom zu liefern. Dadurch kann im Extremfall sogar ein Zusammenbruch des Verbundnetzes verhindert werden. So können in sehr kurzer Zeit eine Vielzahl von Akkumulatoren als Einspeiser zugeschaltet werden und es kann sogar in Pufferkondensatoren der Wechselrichter gespeicherte Energie sehr schnell, wenn auch nur kurzfristig, an das Verbundnetz abgegeben werden, so dass zum Beispiel ein Kurzschlussfehler in dem Verbund im Millisekundenbereich überbrückt werden kann. Eine Kettenreaktion und ein großräumiger Netzausfall, wie bereits in USA und Kanada vorgekommen ist, kann unter Umständen vermieden werden. Dadurch wird die Stromversorgungssicherheit erhöht.

Zudem kann elektrische Energie über die elektrischen Speicher, von zum Beispiel Photovoltaikanlagen, gespeichert werden, was durch ein übergeordnetes Leitsystem vorgegeben sein kann. Häufig ist nämlich aus statistischen Erhebungen der Energiebedarf im voraus bekannt, beispielsweise nach bestimmten Ereignissen, wie nach einer Halbzeitpause nach einem wichtigen Fußballspiel oder die wohlbekannte Mittags-Verbrauchsspitze. So können die Speicher dann voll geladen sein, wenn eine solche Bedarfsspitze gedeckt werden soll. Die Erfindung leistet einen nennenswerten Beitrag zum Energiemanagement.

Die Erfindung beruht auf der Erkenntnis, dass alle Einspeiser, die zu dem erfindungsgemäßen Kraftwerk zusammengefasst werden, eine einheitliche Kommunikationseinheit bilden, die dann in der Lage ist, beispielsweise Istwerte, Parameter und Statusmeldungen vom Einspeiser zu erfragen und zwischenzuspeichern, Sollwerte, Kommandos und Parameter von übergeordneten Steuerungen zu empfangen und auf geeignete Weise an die Einspeiser weiterzugeben, geeignete Schnittstellen, insbesondere Ethernet, RS485, CAN oder ISM-Band Datenfunk-Schnittstellen zur Kommunikation untereinander bzw. mit anderen zum Kraftwerk gehörenden Einspeisern zu nutzen oder auch eine Kommunikation mit einem lokalen Leitsystem für das Kraftwerk zu schaffen, eine Kommunikation mit überregionalen Leitsystemen für ganze Kraftwerkscluster bereitzustellen sowie eine Kommunikation mit weitestgehend beliebigen Datenportalen über das Internet zu ermöglichen.

In einer vorteilhaften Weiterbildung des erfindungsgemäßen Wechselrichters ist vorgesehen, dass mindestens ein Generator ein Photovoltaikgenerator ist. Vorzugsweise ist eine Vielzahl von Photovoltaikgeneratoren zu einem Kraftwerk vernetzt. Photovoltaikgeneratoren weisen überwiegend eine verhältnismäßig geringe Leistung auf und sind für ein einzelnes Gebäude ausgeführt. Beispielsweise werden Photovoltaikmodule auf einem Dach eines Hauses montiert. Die zur Verfügung stehende Fläche ist begrenzt. Daher ist auch die Leistung zum Beispiel im Verhältnis zu einem Kernkraftwerk gering. Werden eine Vielzahl von Haushalten zu einem Kraftwerk vernetzt, dann kann ein nennenswerter Energiebeitrag in kontrollierter Weise in das Verbundnetz eingespeist werden.

Von besonderem Vorteil ist es, wenn mindestens ein Stromerzeuger ein Brennstoffzellen-Stromerzeuger, ein Batteriesystem, ein Biomassekraftwerk, ein Blockheizwerk, ein Brennstoffmotor-Generator, ein Windenergiegenerator, ein Wasserkraftgenerator und/oder ein Gasturbinengenerator kleiner Leistung ist. Durch die Vernetzung und Kommunikation der unterschiedlichen Erzeugertypen kann das Energiemanagement weiter verbessert werden. Durch die Datenkommunikation kann zum Beispiel ein vorbeiziehendes Schlechtwettergebiet berücksichtigt werden, indem seine Richtung berücksichtigt und daraus eine Prognose zur Energieerzeugung erstellt wird. Eine Leistungsverteilung und dessen Änderung kann in einfacher Weise in einem entsprechenden Datensatz zusammengefasst werden. Eine solche Prognose ist für ein Energiemanagement eines übergeordneten Leitsystems sehr von Vorteil. Die Anbindung des Kraftwerkes, bestehend aus einzelnen, auch verschiedenartigen Einspeisern, kann durch beliebige Datenportale erfolgen.

In einer weiteren vorteilhaften Ausgestaltung der Erfindung ist die Datenverbindung zumindest teilweise eine Funkverbindung. Eine solche Funkverbindung ist durch bekannte Übertragungstechniken, wie ISM Funk Bluetooth / WLAN, ZigBee, Z-Wave, NanoNet, EnOcean in einfacher Weise möglich. Durch die Funkübertragung ist eine Vielzahl von Energieerzeugern vernetzbar. Zudem lassen sich auch relativ weite Distanzen überbrücken.

Auch kann die Datenverbindung teilweise oder ganz als kabelverbundene Verbindung ausgeführt sein. Dies ist dann von Vorteil, wenn der Wechselrichter an das Internet angeschlossen ist. Eine solche Kabelverbindung ist relativ störungsfrei. Eine kabelverbundene Vernetzung der Wechselrichter kann zum Beispiel auf RS485, Ethernet, CAN-Technologie basieren.

In einer weiteren Weiterbildung der Erfindung sind in der Kommunikationseinheit Istwerte, Parameter und/oder Statusmeldungen gespeichert. Dadurch kann eine Abfrage von Statusinformationen, Messwerten und/oder Diagnoseinformationen jederzeit erfolgen. Die Speicherung der Daten erlaubt es, dem übergeordneten Leitsystem jederzeit auf bestimmte Daten zugreifen zu können, um Entscheidungen treffen zu können. Eine solche Entscheidung kann zum Beispiel die Drosselung oder Steigerung der Leistung eines Kohlekraftwerkes im zugehörigen Einspeiser-Netzverbund sein.

Analysen können weiter verbessert werden, wenn an dem Datennetzwerk Messwert-Sensoren angeschlossen sind. Vorhanden sein können insbesondere Sekundärgeräte, lokale Datenlogger, Messgeräte zur Erfassung meteorologischer Daten wie Temperaturen, Solareinstrahlung, Windgeschwindigkeit usw. und/oder Geräte zur elektronischen Erfassung von Zählerständen sein.

Günstig ist es, dass ein Versenden von Steuerkommandos, Parameteränderungen und/oder Betriebssoftware für die Stromerzeuger erfolgt. Durch das Versenden dieser Daten kann eine Aktualisierung in automatisierter Weise erfolgen. Durch den Kommunikationsverbund bzw. das Netzwerk partizipiert der einzelne Erzeuger von Informationen der anderen Einheiten und kann so vorteilhaft Rückschlüsse in Bezug auf Systemdiagnose und Betriebsoptimierung erlangen.

Weitere vorteilhafte Ausgestaltungen der Erfindung sind in den Unteransprüchen gekennzeichnet.

Anhand des Ausführungsbeispiels wird die Erfindung nachstehend beispielhaft näher erläutert.
- Fig. 1: zeigt eine schematische Darstellung einer Ethernet- Backbone-Lösung zur Vernetzung einzelner funk- und kabelvernetzter Kraftwerke und Kraftwerkscluster;
- Fig. 2: zeigt eine schematische Darstellung funkvernetzter Solarwechselrichter und
- Fig. 3: zeigt eine schematische Darstellung mehrerer kabelvernetzter Solarwechselrichter mit auf Funk basierter Ankopplung an das Internet.

In den Figuren sind gleiche Teile mit denselben Bezugszeichen versehen.

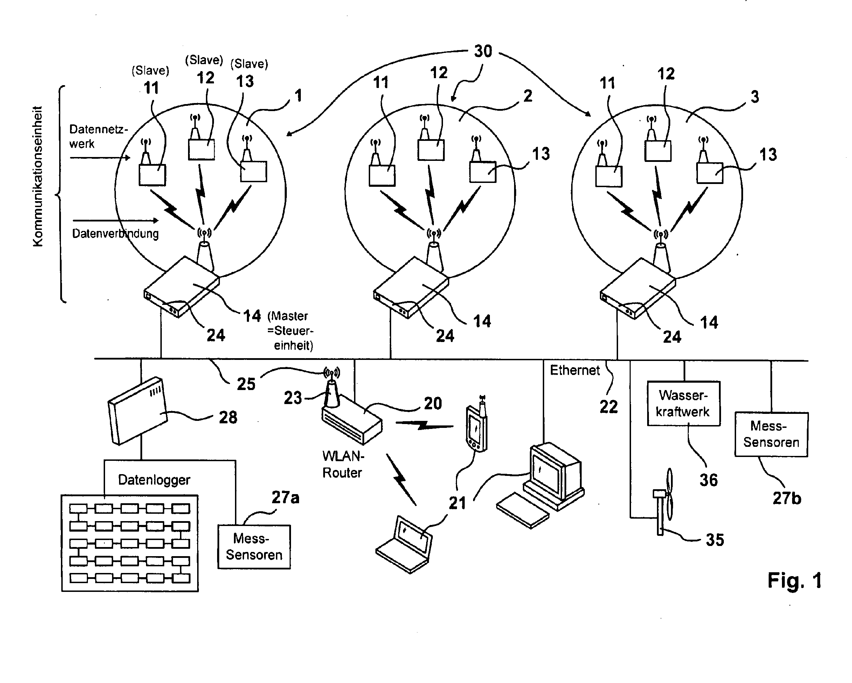

Fig. 1 veranschaulicht eine Ethernet-Backbone-Lösung zur Vernetzung einzelner funk- und kabelvernetzter Kraftwerke bzw. Kraffinrerkseinheiten 1, 2,3.

Jede Kraftwerkseinheit 1, 2, 3 besteht aus einer Vielzahl an Wechselrichtern 11, 12, 13, 14 zur Netzeinspeisung in ein nicht gezeigtes Wechselstromnetz. Stellvertretend für weitere Energieerzeugungsanlagen im Kommunikationsverbund sind hier ein Windkraftwerk (35) und ein Wasserkraftwerk (36) eingezeichnet. Weitere dieser schon erwähnten Kraftwerkstypen können in dem Kommunikationsverbund koexistieren. Zwischen den Wechselrichtern 11 bis 14 besteht eine Datenverbindung, die eine Kabelverbindung oder zum Beispiel eine Bluetooth-Verbindung sein kann. Jeder Wechselrichter ist eingangsseitig mit einem elektrische Energie erzeugenden Photovottaikgenerator verbunden. Wie das Beispiel zeigt, können mehrere Kraftwerkseinheiten zu einer Kraftwerkseinheit bzw. Kraftwerk zusammengefasst werden.

Erfindungsgemäß besteht eine Datenverbindung zu einem Datennetzwerk. Der Wechselrichter 14 ist als Master ausgeführt, wobei die Wechselrichter 11, 12 und 13 als Slaves arbeiten. Der Wechselrichter 14 bildet hierbei die Steuereinheit für die als Slaves arbeitenden Wechselrichter. Jeder Master jeder Kraftwerkseinheit 1, 2, 3 ist an einem WLAN-Router 20 angeschlossen, an dem Kommunikationsgeräte 21, wie PCs, Laptops, PDAs, angeschlossen sein können.

Das Datennetzwerk umfasst Kabelverbindungen 22 und Funkverbindungen 23, die eine Datenverbindung 25 schaffen. Das Datennetzwerk bildet mit den Wechselrichtern 11 bis 14 eine Kommunikationseinheit. Durch die Datenverbindungen 25 können Steuerkommandos, Parameteränderungen und/oder Betriebssoftware für die Photovoltaikgeneratoren bzw. die Wechselrichter gesendet werden.

Die einzelnen Wechselrichter 11 bis 14 werden durch eine Steuerung 24 über die Datenverbindung 25 so gesteuert, dass eine bezüglich Einspeiseparameter einheitliche Kraftwerkseinheit 30 vorhanden ist. Die Einheit 30 ist dann in einem Stromverbund als externe Einheit mit zusammengefasster Kontroll- und Steuerungsstruktur angeschlossen.

Das in Fig. 1 gezeigte Datennetzwerk ist an das Internet angeschlossen und dadurch an eine übergeordnete Steuerung, insbesondere einem lokalen oder überregionalen Leitsystem, angeschlossen. Die übergeordnete Steuerung sendet Sollwerte, Kommandos und/oder Parameter zu dem aus den Wechselrichtern 11 bis 14 bestehenden Netzwerk. Jeder Wechselrichter 11 bis 14 umfasst Mittel zur Kommunikation mit den übrigen Wechselrichtern. In diesen werden Istwerte, Parameter und/oder Statusmeldungen gespeichert.

Ferner zeigt das Datennetzwerk Messwert-Sensoren 27a, 27b, die direkt oder indirekt durch einen Datenlogger 28 angeschlossen sind (Fig. 1).

Von dem Leitsystem können auch Daten zur Kraftwerkseinheit 30 gesendet werden, so dass dieses System für eine bidirektionelle Weiterleitung von Datenpaketen, insbesondere nach einem Netzwerk-Routingverfahren geeignet ist.

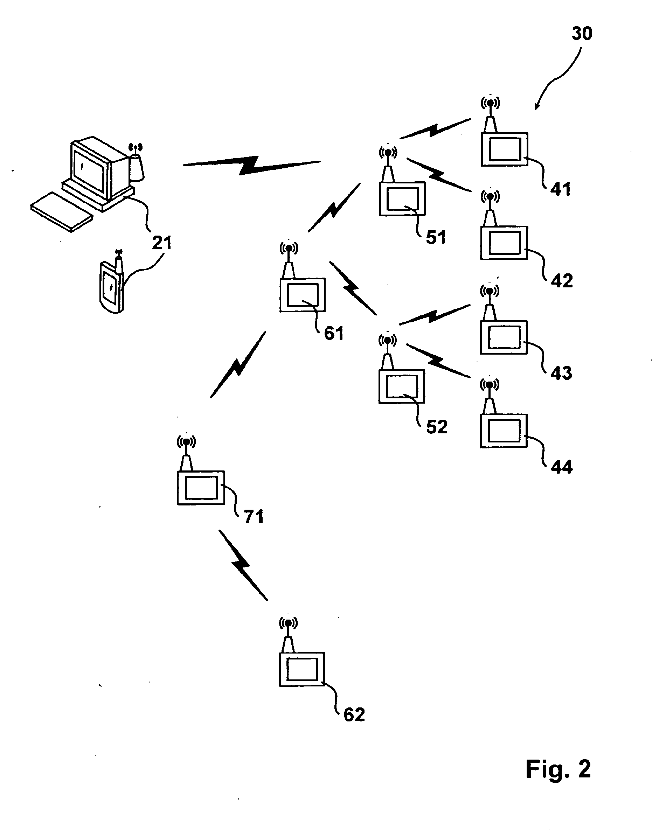

Fig. 2 zeigt eine Variante mit Solarwechselrichtern mit einer Funkverbindung und einer Baumstruktur. Die Wechselrichter 41 und 42 sind dem Wechselrichter 51 untergeordnet, der für beide als Master arbeitet. Die Wechselrichter 43 und 44 sind dem Wechselrichter 52 untergeordnet, der für diese beiden auch als Master arbeitet. Die Wechselrichter 51 und 52 sind dem Wechselrichter 61 untergeordnet. Beide Wechselrichter 61, 62, die für die jeweils untergeordneten Wechselrichter als Master dienen, sind für den Wechselrichter 71 ebenfalls in einer Master-Slave-Beziehung kommunikationsverbunden. An dem Wechselrichter 51 ist ein Kommunikationsgerät 21 angeschlossen.

Alle in Fig. 2 gezeigten Wechselrichter 41 bis 71 bilden mit ihren Generatoren die Kraftwerkseinheit 30. Zwischen den Wechselrichtern 41 bis 71 besteht eine Datenfunkverbindung.

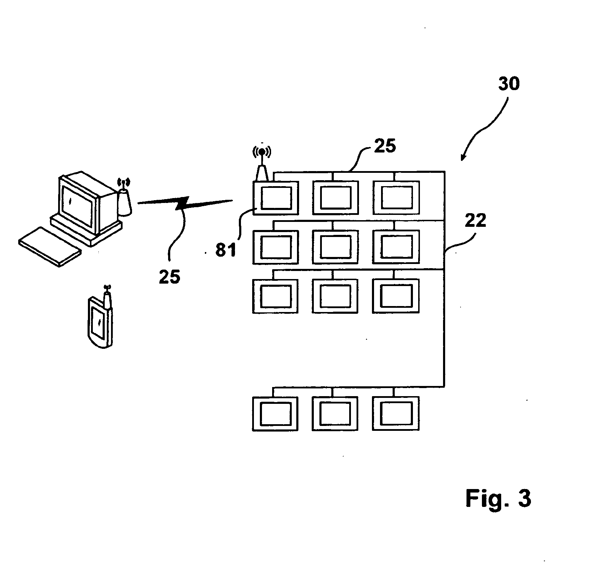

In Fig. 3 wird ein kabelvernetzter Solarwechselrichter 81 dargestellt. Dieser ist mit einer Kabelverbindung mit anderen Wechselrichtern verbunden. Der Solarwechselrichter 81 ist per Funk, insbesondere mittels WLAN an das Internet angeschlossen. Die Kabelverbindung 22 verbindet busartig alle Wechselrichter kommunikativ untereinander. Jeder Wechselrichter bildet mit seinem Photovoltaikgenerator einen Einspeiser. Die Vielzahl der Einspeiser schafft die gewünschte Kraftwerkseinheit.

Jeder Solarwechselrichter ist als DC/AC-Wechselrichter ausgeführt. Es können über 100 Wechselrichter an das Datennetzwerk angeschlossen sein, wobei jeder Stromerzeuger vorzugsweise eine Nennleistung im Bereich von 1 kW bis 100 kW liefert.

Die Erfindung ist nicht auf dieses Beispiel beschränkt, so können anstatt Solargeneratoren auch Akkumulatoren, Windkraftgeneratoren als Einspeiser dienen. Wichtig ist die Einbindung einzelner Einspeiser, die als ein zusammengefasstes Kraftwerk wirken, so dass externe Kontroll- und Steuerungsstrukturen der Energieversorgungsunternehmen vereinfacht werden. Auch können andere Lösungen eingesetzt werden, bei denen die einzelnen Wechselrichter sich an übergeordneten Leistungszielen zum optimalen Betrieb des Verbund-Kraftwerks bzw. der Einheit 30 orientieren.

### Bezugszeichenliste:

- 1 , 2, 3: KRAFTWERKSEINHEIT
- 11, 12, 13, 14: Wechselrichter (Fig. 1)

- 20: WLAN-Router
- 21: Kommunikationsgerät
- 22: Kabelverbindung
- 23: Funkverbindung
- 24: Steuereinheit
- 25: Datenverbindung
- 26: -
- 27a, 27b: Messwertsensoren
- 28: Datenlogger
- 29: -
- 30: Kraftwerkseinheit
- 35: Windkraftwerk
- 36: Wasserkraftwerk

- 41, 42, 43, 44: Wechselrichter (Fig. 2)
- 51, 52: Wechselrichter (Fig. 2)
- 61, 62, 71: Wechselrichter (Fig. 2)
- 81: Solarwechselrichter (Fig. 3)

## Patentansprüche

1. Wechselrichter (14) zur Netzeinspeisung in ein Wechselstromnetz, der eingangsseitig mit einem elektrische Energie erzeugenden Generator verbindbar ist, wobei eine Datenverbindung (25) zu einem Datennetzwerk vorgesehen ist, wobei das Datennetzwerk eine Vielzahl weiterer Wechselrichter (11-13; 41-71; 81) mit weiteren Stromerzeugern zur Stromeinspeisung in das Wechselstromnetz umfasst, wobei das Datennetzwerk mit dem einen Wechselrichter (11-14; 41-71; 81) eine Kommunikationseinheit bildet, wobei der eine einzelne Wechselrichter (11-14; 41-71; 81) als Master für eine Steuereinheit mit einer Vielzahl weiterer als Slaves arbeitender Wechselrichter bildet,
**dadurch gekennzeichnet,**
**dass** durch die Steuereinheit die Kommunikationseinheit so gesteuert wird, dass eine bezüglich Einspeise-Parameter einheitliche Kraftwerkseinheit (30) vorhanden ist, die an einen Stromverbund als externe Einheit mit zusammengefasster Kontroll- und Steuerungsstruktur angeschlossen ist,
wobei das Datennetzwerk durch den als Master arbeitenden Wechselrichter an eine übergeordnete Steuerung, insbesondere an einem lokalen oder überregionalen Leitsystem angeschlossen ist, wobei die übergeordnete Steuerung Sollwerte, Kommandos und/oder Parameter zum aus den Wechselrichtern bestehenden Netzwerk sendet,
wobei dann, wenn der Master ausfällt, ein Slave, der hierarchisch unter dem Master angeordnet ist, die Masterrolle übernimmt..

2. Wechselrichter nach Anspruch 1,
**dadurch gekennzeichnet,**
**dass** mindestens ein Generator ein Photovoltaikgenerator ist.

3. Wechselrichter nach Anspruch 1 oder 2,
**dadurch gekennzeichnet,**
**dass** mindestens ein Stromerzeuger ein Brennstoffzellen-Stromerzeuger, ein Batteriesystem, ein Biomassekraftwerk, ein Blockheizwerk, ein Brennstoffmotor-Generator, ein Windenergiegenerator, ein Wasserkraftgenerator, ein Gasturbinengenerator und/oder ein weiterer Photovoltaikgenerator ist.

4. Wechselrichter nach einem der voranstehenden Ansprüche,
**dadurch gekennzeichnet,**
**dass** die Datenverbindung (25) zumindest teilweise als Funkverbindung (23) ausgebildet ist.

5. Wechselrichter nach einem der voranstehenden Ansprüche,
**dadurch gekennzeichnet,**
**dass** die Datenverbindung (25) zumindest teilweise als kabelverbundene Verbindung (22) ausgebildet ist.

6. Wechselrichter nach einem der voranstehenden Ansprüche,
**dadurch gekennzeichnet,**
**dass** das Datennetzwerk durch den als Master arbeitenden Wechselrichter an einer Datenfernverbindung, insbesondere an das Internet angeschlossen ist.

7. Wechselrichter nach einem der voranstehenden Ansprüche,
**dadurch gekennzeichnet,**
**dass** das Datennetzwerk durch den als Master arbeitenden Wechselrichter an eine übergeordnete Steuerung, insbesondere einem lokalen oder überregionalen Leitsystem, angeschlossen ist, wobei die übergeordnete Steuerung Sollwerte, Kommandos und/oder Parameter zum aus den Wechselrichtern bestehenden Netzwerk sendet.

8. Wechselrichter nach einem der voranstehenden Ansprüche,
**gekennzeichnet durch**
eine Ausführung derart, dass in der Kommunikationseinheit Istwerte, Parameter und/oder Statusmeldungen gespeichert werden.

9. Wechselrichter nach einem der voranstehenden Ansprüche,
**dadurch gekennzeichnet,**
**dass** an dem Datennetzwerk Messwert-Sensoren angeschlossen sind.

10. Wechselrichter nach einem der voranstehenden Ansprüche,
**gekennzeichnet durch**
eine Ausführung derart, dass ein Versenden von Steuerkommandos, Parameteränderungen und/oder Betriebssoftware für Stromerzeuger erfolgt.

11. Wechselrichter nach einem der voranstehenden Ansprüche,
**gekennzeichnet durch**
eine Ausführung derart, dass eine bidirektionale Weiterleitung von Datenpaketen, insbesondere nach einem Netzwerk-Routingverfahren erfolgt.

## Claims

1. DC-AC converter (14) for mains supply in an alternating current mains, which is connectible on the input side with a generator generating electrical energy, wherein a data connection (25) to a data network is provided, wherein the data network comprises a plurality of further DC-AC converters (11-13; 41-71; 81) with further current generators for current supply in the alternating current mains, wherein the data network together with the one DC-AC converter (11-14; 41-71; 81) forms a communications unit, wherein the one individual DC-AC converter (11-14; 41-71; 81) is constituted as a master for a control unit with a plurality of further DC-AC converters operating as slaves, **characterised in that** the communications unit is so controlled by the control unit that a power plant unit (30), which is standardised with respect to supply parameters and which is connected with a current composite as an external unit with combined checking and control structure, is present, wherein the data network is connected by the DC-AC converter, which operates as master, with a superordinate control, particularly with a local or super-regional director system, wherein the superordinate control transmits target values, commands and/or parameters to the network consisting of the DC-AC converters, wherein if the master fails a slave which is hierarchically arranged under the master takes over the master role.

2. DC-AC converter according to claim 1, **characterised in that** at least one generator is a photovoltaic generator.

3. DC-AC converter according to claim 1 or 2, **characterised in that** at least one current generator is a fuel cell current generator, a battery system, a biomass power plant, an engine-based cogenerator, a fuel motor generator, a wind energy generator, a hydroelectric power generator, a gas turbine generator and/or a further photovoltaic generator.

4. DC-AC converter according to any one of the preceding claims, **characterised in that** the data connection (25) is constructed at least in part as a radio connection (23).

5. DC-AC converter according to any one of the preceding claims, **characterised in that** the data connection (25) is constructed at least in part as a cable-bound connection (22).

6. DC-AC converter according to any one of the preceding claims, **characterised in that** the data network is connected by the DC-AC converter, which operates as master, with a data remote connection, particularly with the Internet.

7. DC-AC converter according to any one of the preceding claims, **characterised in that** the data network is connected by the DC-AC converter, which operates as master, with a superordinate control, particularly a local or super-regional director system, wherein the superordinate control transmits target values, commands and/or parameters to the network consisting of DC-AC converters.

8. DC-AC converter according to any one of the preceding claims, **characterised by** a construction of such a kind that actual values, parameters and/or status reports are stored in the communications unit.

9. DC-AC converter according to any one of the preceding claims, **characterised in that** measurement value sensors are connected with the data network.

10. DC-AC converter according to any one of the preceding claims, **characterised by** a construction of such a kind that transmission of control commands, parameter changes and/or operating software for power generators takes place.

11. DC-AC converter according to any one of the preceding claims, **characterised by** a construction of such a kind that a bidirectional passing on of data packets, particularly according to a network routing method, takes place.

## Revendications

1. Onduleur (14) d'alimentation d'un réseau de courant alternatif, qui peut être relié en entrée à un générateur produisant une énergie électrique, dans lequel il est prévu une liaison de données (25) reliée à un réseau de données, le réseau de données comprenant une pluralité d'autres onduleurs (11-13; 41-71; 81) pourvus d'autres générateurs de courant et prévus pour injecter du courant dans le réseau de courant alternatif, le réseau de données formant une unité de communication avec l'un des onduleurs (11-14; 41-71; 81), l'onduleur considéré (11-14; 41-71; 81) formant un maître pour une unité de commande comprenant une pluralité d'autres onduleurs travaillant comme esclaves,
**caractérisé en ce que**
l'unité de communication est commandée par l'unité de commande de telle manière qu'il existe une unité de centrale électrique (30) homogène en ce qui concerne le rapport des paramètres d'injection, qui est connectée à un combiné électrique en tant qu'unité externe à structure de contrôle-commande intégrée,
le réseau de données étant connecté par l'onduleur travaillant comme maître à une commande supérieure, en particulier à un système directeur local ou régional, la commande supérieure envoyant des valeurs de consigne, des ordres et/ou des paramètres au réseau composé des onduleurs,
un esclave qui est hiérarchiquement au-dessous du maître assumant le rôle du maître lorsqu'un maître est défaillant.

2. Onduleur selon la revendication 1,
**caractérisé en ce que**
au moins un générateur est un générateur photovoltaïque.

3. Onduleur selon la revendication 1 ou 2,
**caractérisé en ce que**
au moins un générateur de courant est un générateur de courant à pile à combustible, un système d'accumulateurs, une centrale à biomasse, une centrale thermique en montage bloc avec chauffage à distance, un générateur à moteur à combustion interne, un générateur à énergie éolienne, un générateur hydro-électrique, un générateur à turbine à gaz et/ou un autre générateur photovoltaïque.

4. Onduleur selon l'une des revendications précédentes,
**caractérisé en ce que**
la liaison de données (25) est constituée au moins en partie par une liaison radio (23).

5. Onduleur selon l'une des revendications précédentes,
**caractérisé en ce que**
la liaison de données (25) est constituée au moins partiellement par une liaison par câble (22).

6. Onduleur selon l'une des revendications précédentes,
**caractérisé en ce que**
le réseau de données est connecté par l'onduleur travaillant comme maître à une liaison de télécommunication de données, en particulier à l'Internet.

7. Onduleur selon l'une des revendications précédentes,
**caractérisé en ce que**
le réseau de données est connecté par l'onduleur travaillant comme maître à une commande supérieure, en particulier à un système de guidage local ou régional, la commande supérieure envoyant des valeurs de consigne, ordres et/ou paramètres au réseau composé des onduleurs.

8. Onduleur selon l'une des revendications précédentes,
**caractérisé par**
une forme de réalisation telle que des valeurs réelles, paramètres et/ou annonces d'état soient stockés dans l'unité de communication.

9. Onduleur selon l'une des revendications précédentes,
**caractérisé en ce que**
des capteurs de valeurs de mesure sont connectés au réseau de données.

10. Onduleur selon l'une des revendications précédentes,
**caractérisé par**
une forme de réalisation qui est telle qu'il s'effectue une émission d'ordres de commande, des modifications de paramètres et/ou de logiciels d'exploitation pour les générateurs de courant.

11. Onduleur selon l'une des revendications précédentes,
**caractérisé par**
une forme de réalisation qui est telle qu'il se produise une transmission bidirectionnelle de paquets de données, en particulier selon un procédé de routage de réseau.
